(19) **Europäisches Patentamt**

**European Patent Office**

**Office européen des brevets**

(11) **EP 1 452 099 A1**

(12) **EUROPEAN PATENT APPLICATION**
published in accordance with Art. 158(3) EPC

(43) Date of publication:
**01.09.2004 Bulletin 2004/36**

(51) Int Cl.⁷: **A23L 3/44**

(21) Application number: **02783647.7**

(86) International application number:
**PCT/JP2002/012376**

(22) Date of filing: **27.11.2002**

(87) International publication number:
**WO 2003/047368 (12.06.2003 Gazette 2003/24)**

(84) Designated Contracting States:
**AT BE BG CH CY CZ DE DK EE ES FI FR GB GR IE IT LI LU MC NL PT SE SK TR**

(30) Priority: **04.12.2001 JP 2001369650**

(71) Applicant: **Ajinomoto Co., Inc.**
**Tokyo 104-8315 (JP)**

(72) Inventors:
• **IWASAKI, Issei, AJINOMOTO CO., INC.**
**Kawasaki-shi, Kanagawa 210-8681 (JP)**
• **INOUE, Tsuguo, AJINOMOTO CO., INC.**
**Kawasaki-shi, Kanagawa 210-8681 (JP)**
• **FUKAZAWA, Masahiro**
**Kawasaki-shi, Kanagawa 212-0055 (JP)**
• **SAGARA, Yasuyuki, University of Tokyo**
**Tokyo 113-8656 (JP)**

(74) Representative: **Strehl Schübel-Hopf & Partner**
**Maximilianstrasse 54**
**80538 München (DE)**

(54) **METHOD OF PRODUCING BLOCK-LIKE FREEZE-DRIED FOODS**

(57) A method for producing a block-shaped freeze-dried food product in a shorter drying time is provided, including filling a cooked liquid or paste food in a block-shaped cast tray with a recess part on the bottom, overlaying a metal plate on the bottom of the tray and placing the tray in between heating shelves in a drying chamber, or overlaying a metal plate with a protrusion part at a corresponding position so that the protrusion part can be inserted in and adhere to the recess part on the bottom of the tray and placing the tray in between heating shelves in a drying chamber.

**Description**

BACKGROUND OF THE INVENTION

Field of the Invention

The present invention relates to a method for producing a freeze-dried food product molded in a block shape.

Description of the Related Art

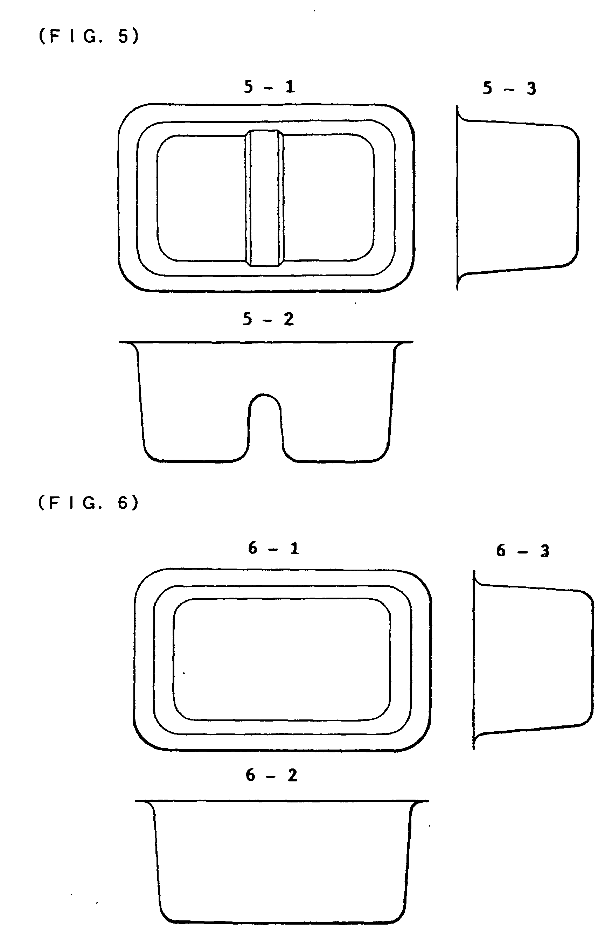

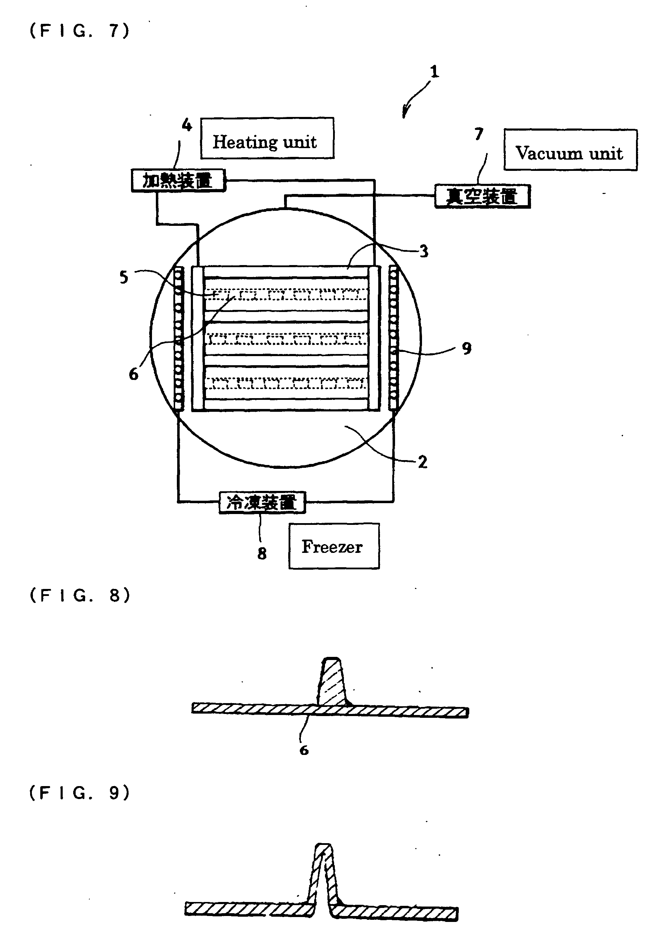

For instant food products of soup, rice gruel, clear soup and like, freeze-dried food products molded in block shapes are sealed in pouches for single meal packages to be introduced on market for sale. The method for producing such block-shaped freeze-dried food products generally includes filling liquid foods or paste foods such as cooked soup and rice gruel in a block-shaped cast tray with the flat bottom as shown in Fig. 6, placing the cast tray in a freezer at -40 °C, supplying the resulting frozen block-shaped foods to be dried in a drying chamber inside a vacuum freeze dryer to freeze-dry the foods in vacuum. Fig.7 shows a view of the whole structure of the vacuum freeze dryer. A plurality of a pair of upper and lower heating shelves 3, 3 are mounted at a given interval along the vertical direction in the drying chamber 2 arranged inside the vacuum freeze dryer 1. These heating shelves 3 , 3 , --- are heated to a given temperature with heating unit 4. The tray 5 of a shape corresponding to the final product shape is placed in between the heating shelves, while metal plate 6 is overlaid on the bottom of the tray. Via the radiant heat from the heating shelves, the tray is heated together with the metal plate, to induce the sublimation of ice in the product in the tray. Then, the inside of the drying chamber 2 is vacuumed with vacuum unit 7 until the pressure reaches a given pressure or less. Subsequently, evaporating steam is again back to ice with trap 9 cooled with freezer unit 8, for cold trapping.

Via the radiant heat from the heating shelves, the tray and the metal plate are heated. Thus, the frozen block-shaped food is dried from the outer periphery thereof toward the inner center thereof. Because the frozen block-shaped food is dried under heating until the temperature of the inner center is almost equal to the surface temperature, a long time is needed for thoroughly drying the food. For example, a block-molded freeze-dried product for single meal package of an egg soup of the recipe used in Examples below is of the following rectangular paralleropiped shape and of a weight of about 10 g as a dry product: a lateral width of about 40 to 60 mm, a width of about 20 to 40 mm and a thickness of about 20 to 30 mm. Such freeze-dried food of single meal type is generally heated with upper radiant heat and transmitted heat from the bottom, so that the food consequently needs a time more than 20 hours for drying.

As drying progresses, the surface of the food not yet dried is back toward the block center, more apart from the heating area. Therefore, a dried layer is formed between the heating area and the part not yet dried. The dried layer functions as an insulation layer to avoid sufficient transmission of thermal energy required for drying. Thus, the drying velocity at the late drying stage significantly influencing the total drying time is distinctly decreased. This will possibly be the cause.

Hence, an example is proposed, where so-called spike plate to retain a heat source inside by pricking the inside of block-shaped frozen meat to be dried with spike is applied as a technical approach for shortening the drying time for freeze-dried products [Journal of Food Science, Vol. 36, pp 899-905 (1971)]. Themethodincludes insertingaheatingmedium in a product to be dried from the sublimation direction of the product to be dried. By the method, the distance between the part to be dried and the heating medium can be shorter. However, the drying area and the heating area occur on the same surface, while the thermal energy given by the heating medium is used as the sublimation energy in the proximity of the heating medium, so that a dried part is formed as an insulation layer between the heating medium and the part not yet dried. Accordingly, no sufficient effect on the decrease of the drying time can be recovered. Furthermore, an additional work is required to remove spike from the dried product. Still furthermore, the pore resulting from the removal of the spike is not preferable from the respect of product appearance.

Additionally, a method is proposed in JP-A- Hei 7-294118, including reducing the tray area in contact to a product as much as possible by using a tray with a net bottom to expose the product surface, so that the evaporating area can be increased to shorten the drying time. The method is effective at the early stage of drying, but can never improve the decrease of the drying velocity at the late stage of drying, which seriously influences the total drying time due to the formation of insulation layer. According to the method, fluid products such as liquid or paste foods should be packed in bags prior to freezing and then be mounted on the tray so as to prevent the overflow of the fluid products from the porous tray during freezing. Therefore, the presence of such bags prior to freezing requires works such as detachment of dried products from the bags, unpreferably.

## SUMMARY OF THE INVENTION

It is an object of the invention to provide a freeze-drying method for producing a freeze-dried food product molded in a block shape with no need of any inconvenient works as described above, which enables ready detachment of the resulting product from a heat source retained inside the block-shaped frozen food to be dried and which can also decrease the drying time.

## BRIEF DESCRIPTION OF THE DRAWINGS

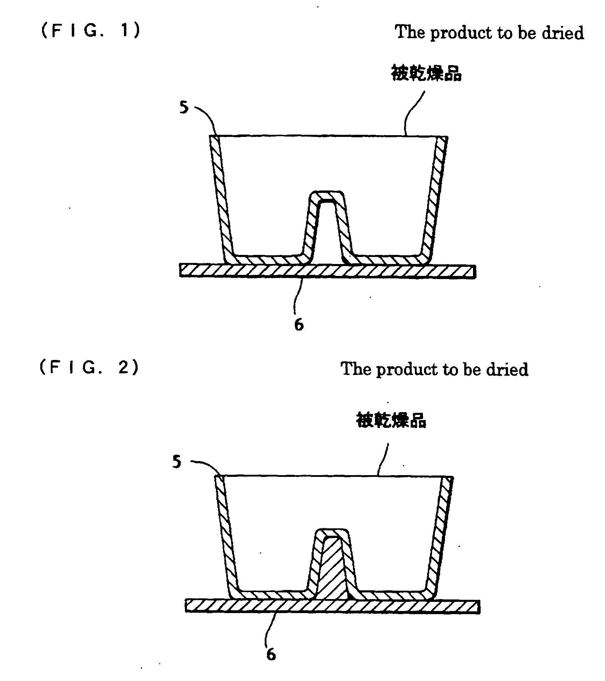

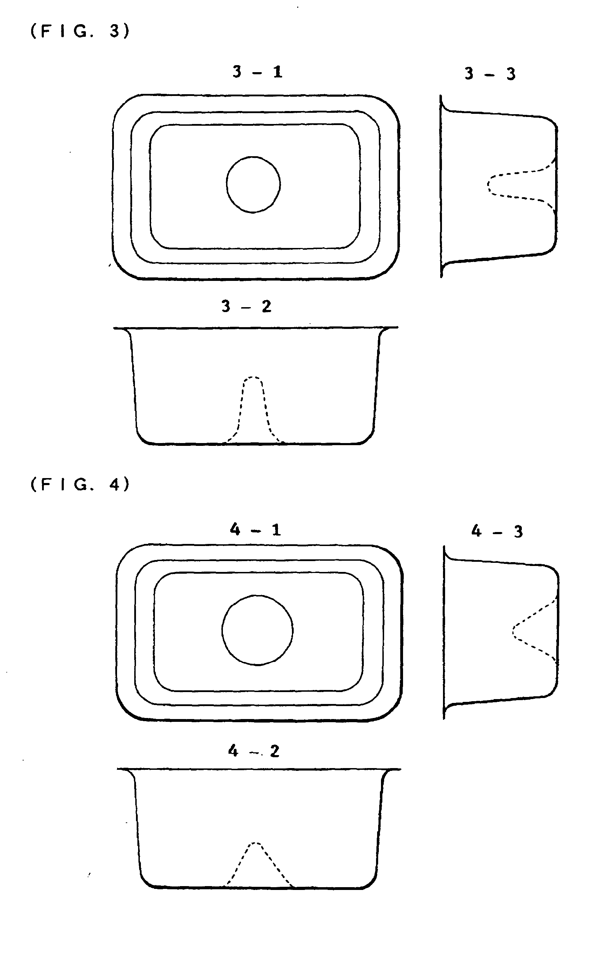

Fig.1 is a partial cross-sectional view of an inventive plastic tray with a recess part on the bottom, which is at a state in adhesion to a metal plate; Fig.2 is a partial cross-sectional view of an inventive plastic tray with a recess part on the bottom, which is at a state in adhesion to a metal plate with a protrusion part capable of adhering to the recess part; Fig.3 is a view depicting one example of the shape of a conical plastic tray of a recess type in accordance with the invention (3-1: plain view; 3-2: front view; 3-3: side view); Fig.4 is a view depicting the other example of the shape of a conical plastic tray of a recess type in accordance with the invention (4-1: plain view; 4-2: front view; 4-3: side view); Fig. 5 is a view depicting one example of the shape of a partitioned plastic tray of a recess type in accordance with the invention (5-1: plain view; 5-2: front view; 5-3: side view); Fig. 6 is a view depicting one example of the shape of a plastic tray of the related art (6-1: plain view; 6-2: front view; 6-3: side view); and Fig. 7 is a view depicting the whole structure of vacuum freeze-dryer.

## DETAILED DESCRIPTION OF THE INVENTION

The inventors have made investigations so as to overcome the problems. The inventors have found that the drying time can be shortened and the removal of the resulting product after freeze-drying from trays can be done in a smooth manner without any trouble, by filling a cooked liquid food or paste food in block-shaped cast tray 5 with the bottom with a recess part as shown in Fig.1, overlaying metal plate 6 capable of adhering to the bottom of the tray thereon and placing the tray in between heating shelves in a drying chamber, more preferably overlaying metal plate 6 with a protrusion part at a corresponding position so that the protrusion part can be inserted in and adhere to the recess part of the bottom of the tray as shown in Fig. 2 and placing the tray in between heating shelves in a drying chamber. In such manner, the radiant heat from the heating shelves directly acts on the recess part of the metal plate 6, through which a heat source can be retained inside the product to be dried. Thus, the distance between a part not yet dried therein and the heat source can be shortened. Consequently, no sublimation area exists between the heating area and the part not yet dried. Therefore, the dried area working as an insulation layer is hardly formed, consequently, involving easier transmission of thermal energy from the heating area to the part not yet dried. Thus, the invention has been attained.

In other words, the invention relates to a method for producing a freeze-dried food product molded in a block shape, including a step of producing a block-shaped dry food by filling a cooked liquid food or paste food in block-shaped cast tray 5 with the bottom with a recess part as shown in Fig.1, overlaying metal plate 6 capable of adhering to the bottom of the tray thereon and placing the tray in between heating shelves in a drying chamber or overlaying metal plate with a protrusion part at a corresponding position so that the protrusion part can be inserted in and adhere to the recess part of the bottom of the tray and placing the tray in between heating shelves in a drying chamber.

The tray 5 to be used in accordance with the invention is of a block shape allowed to adapt to the shape of an intended freeze-dry food product of single meal type, and has a recess part arranged on the bottom, characteristically. Concerning the material, generally, plastic trays are preferably used. From the respects of thermal resistance, intensity and moisture permeability, specifically, trays made of thermoplastic resins such as polyethylene terephthalate, polypropylene and polystyrene are listed. Generally, thermoresistant plastic trays with melting points above 150 °C are satisfactory.

The height of the recess part is a height corresponding to about 25 % or more of the product thickness along the direction from the bottom to the top. When the height of the recess part is below about 25 % of the product thickness, an insulation layer may eventually be formed. When the height is above 50 %, the product after drying is more or less problematic in terms of intensity, depending on the shape of the recess part. Consequently, the product is more readily damaged. The height of the recess part is a height corresponding to the proximity of the inner center of the product, preferably, in view of intensity. Additionally, the overall drying time can then be shortened because the heat source can be closer to a part not yet dried inside the product to be dried.

The shape of the recess part is a steric shape including steric pyramids such as cone, triangle pyramid, rectangular pyramid, and hexagonal pyramid; modified shapes thereof, such as truncated pyramids; poles such as triangle pole and rectangular pole; and cylindrical pole. These shapes are not specifically limited. These shapes are preferably shapes in light of subsequent processing, namely product handling and product release from such trays.

Preferably, metal plate 6 has a protrusion part at a corresponding position so that the protrusion part can adhere to the recess part of tray 5 when the metal plate 6 is overlaid on the tray 5 in contact to the bottom of the tray 5. By placing the tray in between heating shelves 3, 3 arranged inside drying chamber 2 of vacuum freeze-dryer 1, the protrusion part functions as a heat source when the protrusion part receives the radiant heat from the heating shelves 3, to exert an effect on the shortening of the drying time.

The material of the metal plate is preferably stainless steel and aluminium, from the respect of thermal transmission and rust prevention. Aluminium is the most preferable because aluminum is readily molded and processed.

Even if a space with partial non-adhesion exists as in the combination between the plastic tray with a recess part and the metal plate, the drying time can substantially be shortened. Preferably, the protrusion part of the metal plate is allowed to adhere to the recess part of the plastic tray, so that a heat source for inner food can be procured to further shorten the drying time, leading to the productivity improvement and the reduction of production cost.

DESCRIPTION OF PREFERRED EMBODIMENTS

Preferable embodiments for producing a block-shaped freeze-dried food product using vacuum freeze-dryer are described below.

A liquid or paste food such as cooked soup and rice gruel is filled in plastic tray 5 with a recess part arranged therein. Then, the tray is arranged on metal plate 6 (for example, an aluminium plate with a thickness of 2 mm) with a protrusion part, which is then placed as it is in a freezer at -40 °C for freezing. The metal plate 6 together with the tray 5 containing the frozen block- shaped product to be dried is then fed to drying chamber 2 of vacuum freeze-dryer 1. Herein, the overall structure of the vacuum freeze-dryer is almost the same as that of the unit shown in Fig. 7. Inside the drying chamber 2 are arranged plural steps of heating shelf 3. In between the heating shelves, the metal plate 6 together with the tray 5 containing the product to be dried is arranged. So as to vacuum the inside of the drying chamber, subsequently, the drying chamber is sealed, until the pressure reaches a given pressure. Just then, the tray 5 and the metal plate 6 are heated via the radiant heat from the heating shelf 3 heated to a given temperature with heating unit 4, to sublime water in the product in the tray from the frozen state, while the steam is cold trapped in the drying chamber or with trap 9 in communication with the inside of the drying chamber. The drying conditions then are as follows: the peak temperature of the heating shelf is 80 °C to 130 °C and the vacuum level inside the drying chamber is below a given pressure (1 Torr) permitting vacuum freeze-drying. As the shelf temperature namely heating temperature during drying is higher, the drying time can be more shortened, under provisions of restrictions in terms of quality, i.e. no occurrence of burning and the like.

When the moisture content of the product reaches 3 % by weight or less under these conditions, drying is terminated. The inside of the drying chamber is devacuumed, to draw out the metal plate together with the tray. The dried food product then passes through processes including release from the tray and individual packing with an aluminium packaging material.

EXAMPLES

The invention is specifically described in the following examples. The invention is not limited to these examples.

Example 1

Conical product (bottom diameter of $\phi$ 16 mm and a height of 15 mm) + protrusion type metal plate

For the purpose of shortening the drying time of block-shaped instant food products, a plastic tray with flat bottom (of the related art), a plastic tray with the bottom with a conical recess part arranged thereon (of the invention), aluminum plates capable of adhering to the bottoms of the plastic trays, a freezer, and a freeze-dryer were prepared.

The plastic tray of the related art was of an opening inner dimension of a 51-mm lateral side $\times$ a 43-mm width and a bottom inner dimension of a 46-mm lateral side $\times$ a 39-mm width and with the depth of 22.5 mm. The plastic tray modified in accordance with the invention was of an opening inner dimension of a 51-mm lateral side $\times$ a 43-mm width and a bottom inner dimension of a 45-mm lateral side $\times$ a 37-mm width and with the depth of 24 mm. The plastic tray has a recess part of a cone with a bottom circle of $\phi$ 16-mm and a 15-mm height. The shape is shown in Fig.3.

The egg soup prepared by the recipe in the following table was filled in the plastic trays, while the liquid surface was adjusted in parallel to the openings of the plastic trays.

Composition of egg soup

Egg: 33.0 %
Water: 54.0 %
Starch: 1.0 %
Sorbitol: 3.0 %
Monosodium glutamate: 0.7 %
Edible salt: 3.0 %
Bonito extract: 3.7 %
Dry seaweed Undaria: 0.8 %
Dry mushroom shiitake: 0.8 %

The filled-in trays were mounted on the metal plates, for freezing in the freezer adjusted to -40 °C for 12 hours or longer.
The trays together with the metal plates were taken out of the freezer, which were fed as they were to the vacuum freeze-dryer, for vacuum freeze-drying for 16 hours.
The individual weights were measured, to calculate the drying ratio to the weight filled in. The drying ratio was calculated by the following equation.

$$\text{Drying ratio [\%]} = [\text{post-drying weight (G)}] \div [\text{filled-in weight (G)}] \times 100$$

Further, the weight and the drying ratio calculated are shown in the following table.

Table 1

| Sample | Recess part | | | Weight [g] | | Drying ratio [%] |
|---|---|---|---|---|---|---|
| | shape | bottom diameter [mm] | height [mm] | after filled in | after drying over 16 hours | |
| Related art | none | | | 45.33 | 9.25 | 20.4 |
| Invention | cone | $\phi$ 16 mm | 15 | 45.05 | 7.63 | 16.9 |

Compared with the plastic tray of the related art, the combination of the inventive plastic tray with the metal plate was at a smaller drying ratio, which indicates the promotion of the drying velocity.

Example 2

Conical product (bottom diameter of $\phi$ 24 mm and a height of 10 mm) + protrusion type metal plate

For the purpose of shortening the drying time of block-shaped instant food products as in Example 1, a plastic tray with flat bottom as in the related art, a plastic tray with the bottom with a conical recess part of a different shape from the shape as in Example 1 (the invention) , aluminum plates capable of adhering to the bottoms of the plastic trays for dryer feeding, a freezer, and a freeze-dryer were prepared.
The plastic tray of the related art was of an opening inner dimension of a 51-mm lateral side $\times$ a 43-mm width and a bottom inner dimension of a 46-mm lateral side $\times$ a 39-mm width and with the depth of 22.5 mm. The plastic tray modified in accordance with the invention was of an opening inner dimension of a 51-mm lateral side $\times$ a 43-mmwidth and a bottom inner dimension of a 46-mm lateral side $\times$ a 38-mm width and with the depth of 22.5 mm. The plastic tray has a recess part of a cone shape with the bottom circle of $\phi$ 24-mm and 10-mm height (Fig.4).
The egg soup prepared by the same recipe as in Example 1 was filled in the plastic trays. The individual liquid surfaces were adjusted in parallel to the openings of the plastic trays.
The filled-in trays were mounted on the metal plates, for freezing in the freezer adjusted to -40 °C for 12 hours or longer.
The trays together with the metal plates were taken out of the freezer, which were fed as they were to the vacuum freeze-dryer, for vacuum freeze-drying for 16 hours.
The individual weights were measured, to calculate the drying ratio to the weight filled in. The results are shown below.

Table 2

| Sample | Recess part | | | Weight [g] | | Drying ratio [%] |
|---|---|---|---|---|---|---|
| | shape | bottom diameter [mm] | height [mm] | after filled in | after drying over 16 hours | |
| Related art | none | | | 40.67 | 7.24 | 17.8 |
| Invention | cone | φ 24 mm | 10 | 40.76 | 6.89 | 16.9 |

Compared with the plastic tray of the related art, the combination of the inventive plastic tray with the metal plate was at a smaller drying ratio, which indicates the promotion of the drying velocity.

Example 3

Partitioned product (bottom width of 10 mm, 7 ° slope of bottom sloped side, height of 13 mm) + protrusion type metal plate

For the purpose of shortening the drying time of block-shaped instant food products as in Examples 1 and 2, a plastic tray of the related art, a plastic tray with a partitioning recess part (the invention), aluminum plates capable of adhering to the bottoms of the plastic trays for dryer feeding, a freezer, and a freeze-dryer were prepared.

The plastic tray of the related art was of an opening inner dimension of a 51-mm lateral side × a 43-mm width and a bottom inner dimension of a 46-mm lateral side × a 39-mm width and with the depth of 22.5 mm. The plastic tray modified in accordance with the invention was of an opening inner dimension of a 51-mm lateral side × a 43 -mmwidth and abottom inner dimension of a 46-mm lateral side × a 39-mm width and with the depth of 26.5 mm. The plastic tray has a partitioning recess part with a 10-mm width, a 13-mm height and 7 ° slope of sloped side (Fig. 5).

The egg soup prepared by the same recipe as in Examples 1 and 2 was manually filled in the plastic trays. The liquid surface was adjusted in parallel to the openings of the plastic trays.

The filled-in trays were mounted on the metal plates, for freezing in the freezer adjusted to -40 °C for 12 hours or longer.

The trays together with the metal plates were taken out of the freezer, which were fed as they were to the vacuum freeze-dryer, for vacuum freeze-drying for 16 hours.

The individual weights were measured, to calculate the drying ratio to the weight filled in. The results are shown below.

Table 3

| Sample | Recess part | | | Weight [g] | | Drying ratio [%] |
|---|---|---|---|---|---|---|
| | shape | bottom width [mm] | height [mm] | after filled in | after drying over 16 hours | |
| Related art | none | | | 45.33 | 9.25 | 20.4 |
| Invention | partitioning | 10 | 13 | 45.24 | 7.71 | 17.1 |

Compared with the plastic tray of the related art, the combination of the inventive plastic tray with the metal plate was at a smaller drying ratio, which indicates the promotion of the drying velocity.

Example 4

Partitioned product (bottom width of 10 mm, 7 ° slope of bottom sloped side, height of 13 mm) + metal plate

For the purpose of shortening the drying time of block-shaped instant food products as in Example 3, a plastic tray of the related art, a modified plastic tray with a partitioning recess part, aluminum plates for dryer feeding, a freezer, and a freeze-dryer were prepared.

The plastic tray of the related art was of an opening inner dimension of a 51-mm lateral side × a 43-mm width and a bottom inner dimension of a 46-mm lateral side × a 39-mm width and with the depth of 22.5 mm. The plastic tray modified in accordance with the invention was of an opening inner dimension of a 51-mm lateral side × a 43-mm width and abottom inner dimension of a 46-mm lateral side × a 39-mm width and with the depth of 26.5 mm. The plastic tray has a partitioning recess part with a 10-mm width, a 13-mm height and 7° slope of sloped side (Fig. 5).

The egg soup prepared by the same recipe as in Example 3 was filled in the plastic trays. The liquid surface was made parallel to the openings of the plastic trays.

The filled-in trays were mounted on the metal plates, for freezing in the freezer adjusted to -40 °C for 12 hours or longer.

The trays together with the metal plate were taken out of the freezer, which were fed as they were to the vacuum freeze-dryer, for vacuum freeze-drying for 14 hours.

The individual weights were measured, to calculate the drying ratio to the weight filled in. The results are shown below.

Table 4

| Sample | Recess part | | | Weight after filled in | [g] after drying over 14 hours | Drying ratio [%] |
|---|---|---|---|---|---|---|
| | shape | bottom width [mm] | height [mm] | | | |
| Related art | none | | | 40.53 | 8.86 | 22.1 |
| Invention | partitioning | 10 | 13 | 40.29 | 7.70 | 19.1 |

Compared with the plastic tray of the related art, (the combination of) the inventive plastic tray (with the metal plate) was at a smaller drying ratio, which indicates the promotion of the drying velocity. However, the results are inferior to the test results in Example 3. By allowing a heat source to be present in the inside of the product to be dried by combining the plastic tray with a recess part with the metal plate with a protrusion part capable of adhering to the recess part, the drying ratio was further increased, compared with that of the related art.

Example 5

Confirmation of the effect of the modification of the shape of a metal plate of a protrusion type

In the same manner as in Examples 1 to 4, the shape of the protrusion of a metal plate was examined for the purpose of shortening the drying time of block-shaped instant food products. Those described below were prepared: a plastic tray with a recess part of the conical shape (bottom diameter of $\phi$ 16 mm and height of 15 mm) shown in Fig. 3, which is the most appropriate in Examples 1 to 4; two types of protrusion type aluminiumplates capable of adhering to the bottom of the plastic tray, of which shapes differ from each other, depending on the methods for producing such shapes; a freezer and a freeze-dryer.

The different protrusion type aluminium plates were made by different production methods. One was made by pressing one plate, so the inside of the protrusion was hollow. The other was made by a process of opening a hole in a plain plate, inserting a protrusion member in the resulting hole and calking the hole part. These are shown in Figs. 8 and 9.

The egg soup prepared by the same recipe as in Examples 1 to 4 was filled in the plastic trays by hands. The liquid surface was adjusted in parallel to the openings of the plastic trays.

The filled-in trays were mounted on the two protrusion type aluminium plates, for freezing in the freezer adjusted to -40 °C for 12 hours or longer.

The protrusion type aluminium plates were taken out of the freezer, which were fed as they were to the vacuum freeze-dryer, for vacuum freeze-drying for 14 hours.

The individual water contents were measured, to calculate the drying ratios. The results are shown below.

Table 5

| | Recess part | | | Water content [%] | Drying ratio [%] |
|---|---|---|---|---|---|
| | shape | bottom diameter [mm] | height [mm] | | |
| Calking | cone | $\phi$ 16 | 14.5 | 0.87 | 16.14 |
| Pressing | cone | $\phi$ 16 | 14.5 | 0.71 | 16.11 |

The drying ratio was decreased when the inventive plastic tray and the press product of the metal plate of the protrusion shape and with the hollow cone part were used, compared with the calked product with no hollow cone part when used. The drying velocity was increased.

ADVANTAGES OF THE INVENTION

As described above, a plastic tray with a recess part on the bottom is placed in between heating shelves in a drying chamber for freeze-drying, while the plastic tray is at a state in adhesion to a metal plate preferably having a protrusion part corresponding to the recess part, so that the drying time can be greatly shortened. Thus, great contributions can be made to the improvement of the productivity and the reduction of the production cost.

**Claims**

1. A method for producing a block-shaped freeze-dried food product, including filling a cooked liquid or paste food in a block-shaped cast tray with a recess part on the bottom, overlaying a metal plate on the bottom of the tray and placing the tray in between heating shelves.

2. A method for producing a block-shaped freeze-dried food product, including filling a cooked liquid or paste food in a block-shaped cast tray with a recess part on the bottom, overlaying a metal plate with a protrusion part at a corresponding position so that the protrusion part can be inserted in and adhere to the recess part on the bottom of the tray and placing the tray in between heating shelves.

3. A method for producing a block-shaped freeze-dried food product according to claim 1 or 2, where the height of the recess part of the tray is a height corresponding to 25 % or more of the thickness of the product to be molded in a block shape.

4. A method for producing a block-shaped freeze-dried food product according to claim 1 or 2, where the height of the recess part of the tray is a height corresponding to the proximity of the center in the inside of the product to be molded in a block shape.

(F I G. 1)

The product to be dried

被乾燥品

5

6

(F I G. 2)

The product to be dried

被乾燥品

5

6

(F I G. 3)

3 - 1

3 - 3

3 - 2

(F I G. 4)

4 - 1

4 - 3

4 - 2

(FIG. 5)

5 - 1                    5 - 3

5 - 2

(FIG. 6)

6 - 1                    6 - 3

6 - 2

(F I G. 7)

(F I G. 8)

(F I G. 9)

## INTERNATIONAL SEARCH REPORT

International application No.

PCT/JP02/12376

**A. CLASSIFICATION OF SUBJECT MATTER**
Int.Cl⁷ A23L3/44

According to International Patent Classification (IPC) or to both national classification and IPC

**B. FIELDS SEARCHED**

Minimum documentation searched (classification system followed by classification symbols)
Int.Cl⁷ A23L3/44

Documentation searched other than minimum documentation to the extent that such documents are included in the fields searched

Electronic data base consulted during the international search (name of data base and, where practicable, search terms used)
WPI (DIALOG)

**C. DOCUMENTS CONSIDERED TO BE RELEVANT**

| Category* | Citation of document, with indication, where appropriate, of the relevant passages | Relevant to claim No. |
|---|---|---|
| X | JP 6-261679 A (Nissin Food Products Co., Ltd.), 20 September, 1994 (20.09.94), (Family: none) | 1-4 |
| A | JP 2-126089 A (ULVAC Japan Ltd.), 15 May, 1990 (15.05.90), (Family: none) | 1-4 |
| A | JP 10-327813 A (Asuzac Foods Kabushiki Kaisha), 15 December, 1998 (15.12.98), (Family: none) | 1-4 |
| A | JP 8-196223 A (Sakamoto Koryo Kabushiki Kaisha), 06 August, 1996 (06.08.96), (Family: none) | 1-4 |

☐ Further documents are listed in the continuation of Box C.    ☐ See patent family annex.

| | |
|---|---|
| * Special categories of cited documents: <br> "A" document defining the general state of the art which is not considered to be of particular relevance <br> "E" earlier document but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br> 06 February, 2003 (06.02.03) | Date of mailing of the international search report <br> 25 February, 2003 (25.02.03) |
| Name and mailing address of the ISA/ <br> Japanese Patent Office | Authorized officer |
| Facsimile No. | Telephone No. |

Form PCT/ISA/210 (second sheet) (July 1998)